# EUROPEAN PATENT APPLICATION

(11) **EP 3 731 132 A1**
(43) Date of publication of application: **28.10.2020**
(21) Application number: 19171150.6
(22) Date of filing: 25.04.2019
(51) Int. Cl.: G06K 9/00, G06T 13/40

(54) **METHOD OF GENERATING 3D FACIAL MODEL FOR AN AVATAR AND RELATED DEVICE**

(71) Applicant: XRSpace CO., LTD., Taoyuan City 330 (TW)
(72) Inventor: Lin, Ting-Chieh, 220 New Taipei City (TW); Chou, Shih-Chieh, 116 Taipei City (TW)
(74) Representative: Straus, Alexander

(57) **Abstract**

A method of generating 3D facial geometry for an avatar, used in a computing device is disclosed. The method comprises obtaining a 2D image (200), performing a landmark detection operation on the 2D image, to obtain at least a facial feature with landmarks (210), determining weightings for a plurality of classifications of the facial feature based on relative distances of the landmarks, wherein the plurality of classifications are predefined in the computing device (220), and generating a 3D facial model based on a 3D face template with 3D parameters corresponding to the classifications of the facial feature and the weightings (230).

## Description

### Field of the Invention

The present disclosure relates to 3D facial reconstruction, and more particularly, to a method of generating 3D facial model from a single 2D image for games and simulations.

### Background of the Invention

Reconstruction of 3D facial model using 2D image is an ongoing challenge for game immersion and simulation design. For example, users want to feel as though the avatars that they see on screen are themselves and that the experiences of their avatars are their own. To that end, much work has been done in the area of 3D facial reconstruction for the purpose of inserting one's own likeness into a game or simulation. However, most existing methods require a minimum of two images and complex computations to produce the 3D facial model.

In the past, a number of methods have been proposed for face reconstruction using a single image. Among them, example-based methods first build a low-dimensional parametric representation of 3D face models from an example set, and then fit the parametric model to the input 2D image. One of the most well-known examples is the 3D morphable model (3DMM) applied with convolutional neural network (CNN). 3DMM is a popular parametric face model due to its simplicity, and has been the foundation of other more sophisticated face reconstruction methods. However, such methods cannot generate faces with individual characteristics and can only be used for face recognition under specific conditions. In addition, a lack of adequate training data is a big problem in CNN, and thus it gets a shallow residual network.

Another approach to single image reconstruction is to solve it as shape from shading (SFS), a classical computer vision problem of 3D shape recovery from shading variation. For example, Kemelmacher-Shlizerman and Basri reconstruct the depth information from an input face image, by estimating its lighting and reflectance parameters using a reference face shape. While these existing approaches are able to produce high quality reconstruction from a single image, they also come with limitations.

Although 3DMM method is simple and efficient, it may produce unsatisfactory results when the target face is largely different from those in the example set. Moreover, due to the limited degrees of freedom of the low-dimensional model, this method often fails to reproduce fine geometric details (such as wrinkles) that are specific to the target face. On the other hand, SFS-based method is able to capture the fine-scale facial details from the appearance of the input image. However, it requires prior knowledge about the geometry or illumination to resolve the ambiguity of the reconstruction problem, and may become inaccurate when the input image does not satisfy the assumptions.

### Summary of the Invention

This in mind, the application aims at providing a method of generating 3D facial model for an avatar in order to solve the above mentioned problems.

This is achieved by a method of generating 3D facial model for an avatar according to claims 1, 2 and 3. The dependent claims pertain to corresponding further developments and improvements.

As will be seen more clearly form the detailed description following below, the claimed method of generating 3D facial geometry for an avatar in a computing device comprises obtaining a 2D image, performing a landmark detection operation on the 2D image, to obtain at least a facial feature with landmarks, determining weightings for a plurality of classifications of the facial feature based on relative distances of the landmarks, wherein the plurality of classifications are predefined in the computing device, and generating a 3D facial model based on a 3D face template with 3D parameters corresponding to the classifications of the facial feature and the weightings.

### Brief Description of the Drawings

Fig. 1 is a schematic diagram of a 3D facial geometry generating device according to one embodiment of the present disclosure.
FIG. 2 is a flowchart according to an embodiment of the present disclosure.
FIG. 3 is a schematic diagram of face shape types according to an embodiment of the present disclosure.
FIG. 4 is a schematic diagram of a 2D image according to an embodiment of the present disclosure.
FIG. 5 is a schematic diagram of a landmark detection operation according to an embodiment of the present disclosure.
FIG. 6 is a schematic diagram of a 3D facial model according to an embodiment of the present disclosure.

### Detailed Description

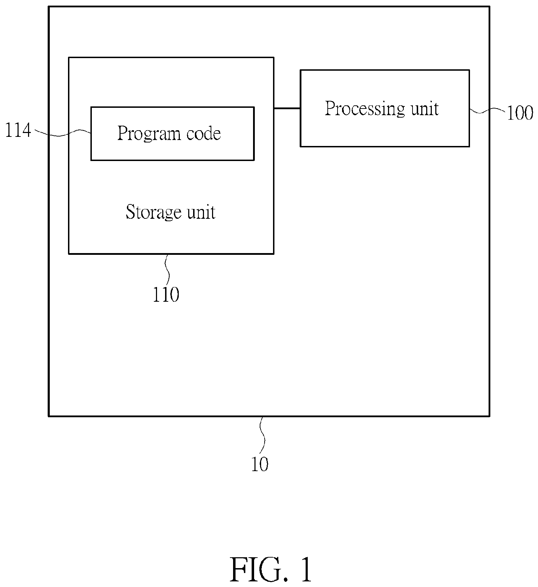

Fig. 1 is a schematic diagram of a 3D facial geometry generating device 10 according to one embodiment of the present disclosure. The 3D facial geometry generating device 10 may be a local computing device or a cloud, and includes a processing unit 100, such as a microprocessor or Application Specific Integrated Circuit (ASIC), a storage unit 110 and a communication interfacing unit 120. The storage unit 110 may be any data storage device that can store a program code 114, for access by the processing unit 100. Examples of the storage unit 110 include but are not limited to a subscriber identity module (SIM), read-only memory (ROM), flash memory, random-access memory (RAM), CD-ROMs, magnetic tape, hard disk, and optical data storage device. The communication interfacing unit 120 is applied with a wire or wireless communication for exchange signals with a camera and/or a display device (not shown in Fig. 1) according to processing results of the processing unit 100. In other words, the communication interfacing unit 120 of the 3D facial geometry generating device 10 is used for receiving a 2D image from the camera and may be used for transmitting the generated 3D facial model to the display device. Thus, the display device could display the avatar with the generated 3D facial model, to increase the VR immersion. In an embodiment, the camera, display device and the 3D facial geometry generating device 10 as the local computing device or the cloud form an avatar simulation system.

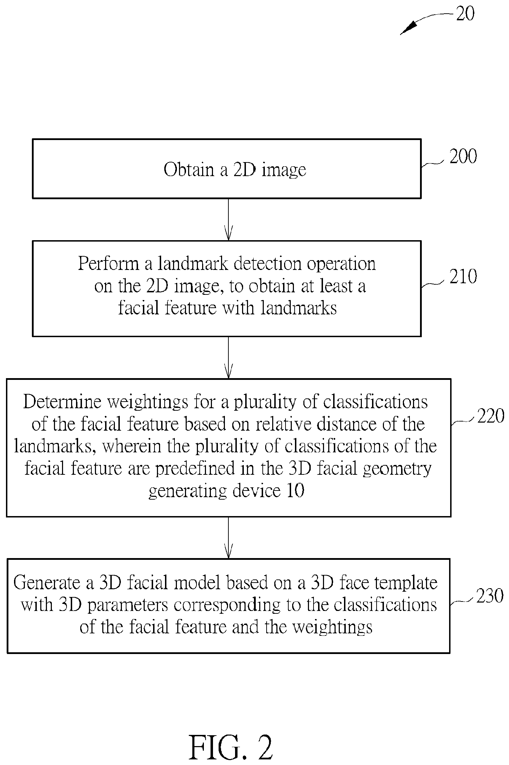

Reference is made to Fig. 2. A flowchart of a process 20 according to an embodiment of the present disclosure is illustrated. The process 20 could be utilized in the 3D facial geometry generating device 10 of Fig. 1 for generating 3D facial model based on a single 2D image for games (e.g. a VR game) and simulations (e.g. an avatar). The process 20 may be compiled into a program code 114 to be stored in the storage unit 110, and may include the following steps:

| | |
|---|---|
| Step 200: | Obtain a 2D image. |
| Step 210: | Perform a landmark detection operation on the 2D image, to obtain at least a facial feature with landmarks. |
| Step 220: | Determine weightings for a plurality of classifications of the facial feature based on relative distance of the landmarks, wherein the plurality of classifications of the facial feature are predefined in the 3D facial geometry generating device 10. |
| Step 230: | Generate a 3D facial model based on a 3D face template with 3D parameters corresponding to the classifications of the facial feature and the weightings. |

According to the process 20, the 3D facial geometry generating device 10 may receive a 2D image from the camera by the communication interfacing unit 120, from the storage unit 110 pre-storing multiple 2D images, or from a database on the internet/website, and then generates the 3D facial model based on the 2D image with landmark detection operation.

In detail, the 3D facial geometry generating device 10 extracts facial features, such as face shape, eyes, nose, eyebrows and mouth according to the landmarks on the 2D image, so as to recognize classifications of each facial feature.

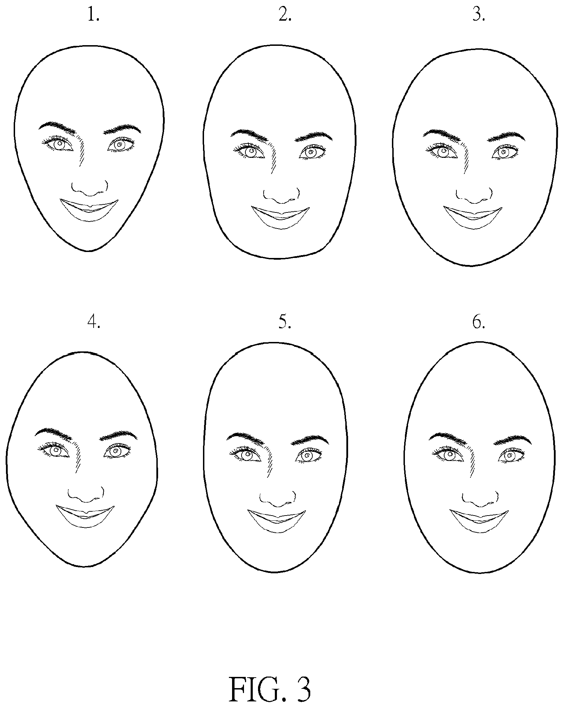

In an embodiment, classifications of the face features are predefined or designed in the application/software. Reference is made to Fig. 3, which is a schematic diagram of face shape types according to an embodiment of the present disclosure. As shown in Fig. 3, the face shape could be classified into round face, square face, long face, heart face, diamond face, or oval face, but is not limited herein. Note that, for each face shape type/classification, the designer configures 3D parameters associated to geometry of the face shapes. In other words, each face shape type/classification is represented by a 3D parameter. Note that, the 3D parameter in this article may be a set of parameters corresponding to curve of a chin width and length, but is not limited herein.

Similarly, eyes, nose, eyebrows and mouth are classified into multiple types. For example, eye shape includes upturned eyes, downturned eyes, round eyes, close set eyes, wide set eyes, almond eyes, monolid eyes, protruding eyes, and hooded eyes. Mouth shape includes, thin lips, large full lips, oval lips, downturned lips, sharp lips, small lips. Nose shape includes high nose, low nose, pointing nose, round nose, hooked nose.

Based on the classifications of the facial features, the 3D facial geometry generating device 10 determines the weights for each classification of a facial feature via artificial intelligence (AI)/machine learning technology. For example, there are 6 types of face shape, such as round face, square face, long face, heart face, diamond face, or oval face, and the 6 types of face shape are represented as 3D parameters T1-T6 in the following equation. With application of AI/machine learning technology, the 3D facial geometry generating device 10 can calculate the probability that the landmark face shape belongs to the 6 face types, so as to determine weights, which is represented as W1-W6 in the following equation, for the 6 face types based on the probability. The 3D facial shape could be generated and is expressed by:
3D facial model =S₀+T1W1+T2W2...+T6W6, wherein S₀ is 3D face shape template.

In an embodiment, weighting determination may be relied on relative distances of the landmarks on the 2D image. For example, based on the predefined aspect ratio, which could be calculated based on the relative distances of the landmarks, of the six types of face shape, the 3D facial geometry generating device 10 knows the probability that the marked face shape on the 2D image belongs to the six types of face shape.

With such manner, the 3D facial geometry generating device 10 determines weights for each types/classification of eyes, nose, mouth and eyebrows, and therefore generates a complete and accurate 3D facial model for the avatar. For example, there are 9 types of eye shape, and thus the 3D facial model is expressed by:
3D facial model = S₀+T1W1+T2W2...+T9W9, wherein S₀ is 3D eye shape template, T1-T9 are 3D parameters associated to the eye shapes, and W1-W9 are weights corresponding to the eye shapes.

In an embodiment, the face shape type/classification is not determined, and the 3D facial geometry generating device 10 determines weights for each face shape type according to the probability. However, in other embodiment, the face shape type(s) is determined, i.e. by comparing the predefined aspect ratio to the marked face shape on the 2D image, and then calculate the weight(s) for the determined face shape type(s).

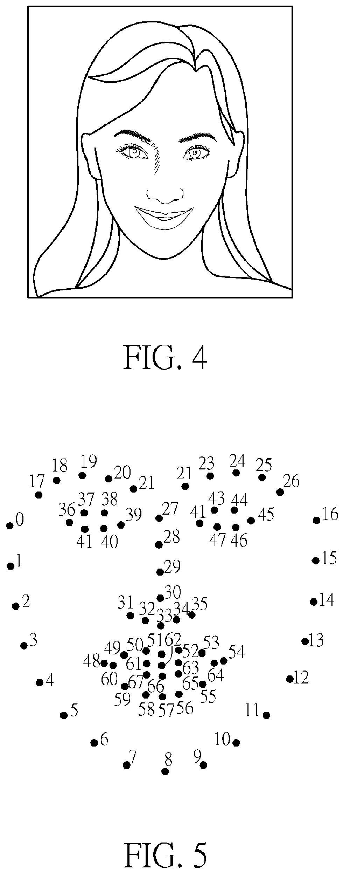

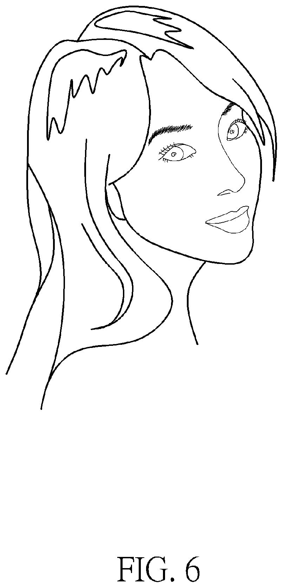

In an embodiment, the landmark detection operation is applied with Dlib Face Landmark Detector for face detection on the 2D image, so as to realize facial feature classification (i.e. face shape prediction). In detail, Dlib Face Landmark Detector detects the face in a given image, as shown in Fig. 4, and then it outputs the face landmark points (68 points in image coordinate), as shown in Fig. 5. Finally, with the abovementioned AI/machine learning technology for weighting determination, the 3D facial geometry generating device 10 generates 3D facial model as shown in Fig. 6.

The detailed operation for the landmark detection operation is as following.
1. Prepare training data (images with labeled facial landmarks).
2. Training the facial landmark model by using dlib's regression tree which is based on "cascaded regression" with:
   2.1. 10 cascade, with 500 trees in each cascade;
   2.2. Loss function, such as square error loss;
   2.3. Learning rate: 0.1.
3. Deploy the facial landmark model.

The abovementioned steps of the processes including suggested steps can be realized by means that could be a hardware, a firmware known as a combination of a hardware device and computer instructions and data that reside as read-only software on the hardware device or an electronic system. Examples of hardware can include analog, digital and mixed circuits known as microcircuit, microchip, or silicon chip. Examples of the electronic system can include a system on chip (SOC), system in package (SiP), a computer on module (COM) and the 3D facial geometry generating device 10.

In conclusion, the present disclosure addresses to 3D facial reconstruction with landmark detection operation. In detail, based on the shape prediction of the landmark detection operation, the weights for classifications/types of facial features could be accurately determined, so as to create the highest-quality, most realistic 3D facial model. This method shows superior accuracy compared to the conventional methods.

## Claims

1. A method of generating 3D facial geometry for an avatar, used in a computing device, **characterized by** the method comprising:
obtaining a 2D image (200);
performing a landmark detection operation on the 2D image, to obtain at least a facial feature with landmarks (210);
determining weightings for a plurality of classifications of the facial feature based on relative distances of the landmarks, wherein the plurality of classifications are predefined in the computing device (220); and
generating a 3D facial model based on a 3D face template with 3D parameters corresponding to the classifications of the facial feature and the weightings (230).

2. An avatar simulation system comprising:
a camera, for obtaining a 2D image;
a computing device or a cloud, for generating 3D facial model for an avatar;
wherein the computing device or the cloud includes:
a processing unit for executing a program; and
a storage unit coupled to the processing unit for storing the program; **characterized in that** the program instructs the processing unit to perform the following steps:
obtaining a 2D image (200);
performing a landmark detection operation on the 2D image, to obtain at least a facial feature with landmarks (210);
determining weightings for a plurality of classifications of the facial feature based on relative distances of the landmarks, wherein the plurality of classifications are predefined in the computing device (220); and
generating a 3D facial model based on a 3D face template with 3D parameters corresponding to the classifications of the facial feature and the weightings (230).

3. A computing device for generating 3D facial geometry for an avatar, the computing device comprising:
a processing unit for executing a program; and
a storage unit coupled to the processing unit for storing the program; **characterized in that** the program instructs the processing unit to perform the following steps:
obtaining a 2D image (200);
performing a landmark detection operation on the 2D image, to obtain at least a facial feature with landmarks (210);
determining weightings for a plurality of classifications of the facial feature based on relative distances of the landmarks, wherein the plurality of classifications are predefined in the computing device (220); and
generating a 3D facial model based on a 3D face template with 3D parameters corresponding to the classifications of the facial feature and the weightings (230).

4. The method of claim 1, the avatar simulation system of claim 2, or the computing device of claim 3, **characterized in that** the facial features comprise a face shape, eyes, eyebrows, a nose and a mouth.

5. The method of claim 4, further comprising:
determining at least a classification of the plurality of classifications of the facial feature according to the relative distance of the landmarks, or the avatar simulation system or the computing device of claim 4, **characterized in that** the program further instructs the processing unit to perform the following steps:
determining at least a classification of the plurality of classifications of the facial feature according to the relative distance of the landmarks.

6. The method of claim 5, **characterized in that** determining the at least a classification of the plurality of classifications of the facial feature according to the relative distance of the landmarks comprises:
determining a width and a length of the facial feature according to the relative distance of the landmarks, to obtain a ratio of the face feature; and
determining the classification of the face feature according to the ratio, or the avatar simulation system or the computing device of claim 5, **characterized in that** the program further instructs the processing unit to perform the following steps:
determining a width and a length of the facial feature according to the relative distance of the landmarks, to obtain a ratio of the face feature; and
determining the classification of the face feature according to the ratio.

7. The method of claim 1, **characterized in that** determining weightings for the plurality of classifications of the facial feature based on relative distances of the landmarks:
determining a width and a length of the facial feature according to the relative distance of the landmarks, to obtain a ratio of the face feature; and
determining weightings for the plurality of classifications of the facial feature according to the ratio, or the avatar simulation system of claim 2, or the computing device of claim 3, **characterized in that** the program instructs the processing unit to perform the following steps:
determining a width and a length of the facial feature according to the relative distance of the landmarks, to obtain a ratio of the face feature; and
determining weightings for the plurality of classifications of the facial feature according to the ratio.
